# EUROPEAN PATENT SPECIFICATION

(11) **EP 0 757 166 B1**
(45) Date of publication and mention of the grant of the patent: **29.11.2000**
(21) Application number: 96305758.3
(22) Date of filing: 05.08.1996
(51) Int. Cl.: F02D 17/04

(54) **Improved engine shutdown valve**
Motorabsperrklappe
Clapet d'arrêt pour moteur

(30) Priority: 03.08.1995 CA 2155362
(43) Date of publication of application: 05.02.1997
(73) Proprietor: Barber Industries, Inc., Calgary, Alberta T2P 3H5 (CA)
(72) Inventor: Krepela, Joseph, Edmonton, Alberta (CA)
(74) Representative: Gilding, Martin John

(56) References cited:
- CA-A- 1 335 487
- US-A- 4 422 418
- US-A- 4 537 386
- US-A- 5 203 536

## Description

### INTRODUCTION

This invention relates to an engine shutdown valve and, more particularly, to an engine shutdown valve of unique configuration used to terminate engine operation.

### BACKGROUND OF THE INVENTION

Engine shutdown valves are well known in the diesel engine industry. Such valves are used to terminate the operation of a diesel engine when overrevving results from combustible vapours being present in the atmosphere in which such engines are operated or when other mechanical failures may occur or be imminent. By terminating atmospheric or air flow through the intake manifold in which combustible vapours are present, the engine will starve from lack of oxygen and the engine will shutdown thereby preventing damage to the engine caused by overrevving. Such engine shutdown valves are, for example, disclosed in our U.S. Patents 4,215,845, 4,285,494, 4,537,386 and 5,203,536.

In United States Patent 5,203,536, there is disclosed an engine shutdown valve which utilises a tension spring to close the gate to which it is attached and to thereby terminate air flow through the intake manifold of the engine. However, when the gate is in its usual open position, the tension spring was fully extended and, in this extended position, it was vulnerable to engine vibration. This was disadvantageous. A further disadvantage in the valve disclosed in the aforementioned '536 patent is that the tension spring was not accessible from the outside of the housing of the shutdown valve. The shutdown valve was required to be completely disassembled to obtain access to the tension spring for replacement or adjustment.

In United States Patent 4,537,386, there is disclosed an engine shutdown valve wherein the valve is connected in two housing halves which are joined along a plane transverse to the axis of the air passageway. The use of such a valve utilises excessive space where space is limited particularly along the direction of the air passageway of an engine within which the valve is mounted. This latching mechanism is also complicated and unwieldy.

It is an object of the invention to provide an engine shutdown valve which attempts to alleviate the aforementioned problems and provides improvements generally. The prior art proposals for engine shutdown valves all require complicated latching mechanisms.

### SUMMARY OF THE INVENTION

According to the invention, there is provided an engine shutdown valve comprising a housing, a gate within said housing and being pivotable about a gate axis, a substantially unobstructed full bore air flow passage extending through said housing and having a longitudinal axis parallel to said gate axis, a first compression spring operably mounted so as to bias and move said gate from a first position wherein said air flow passage is substantially unobstructed to a second position wherein said air flow passage is closed and a piston assembly having a spindle operably acting on said gate, said spindle having a first gate retaining position in which said gate is retained in said first position and a second gate release position out of engagement with said gate when said gate is in said second position, said spindle operably acting to release said gate when said spindle moves from said first retaining to said second release position.

### BRIEF DESCRIPTION OF THE SEVERAL VIEWS OF THE DRAWINGS

An embodiment of the invention will now be described by way of example only, with the use of drawings in which:
Figure 1 is a sectional side view of the engine shutdown valve according to the invention;
Figure 2 is an end sectional view of the engine shutdown valve of Figure 1 and
Figure 3 is an enlarged sectional view of the area of the housing illustrating the latching action of the piston assembly.

### DESCRIPTION OF SPECIFIC EMBODIMENT

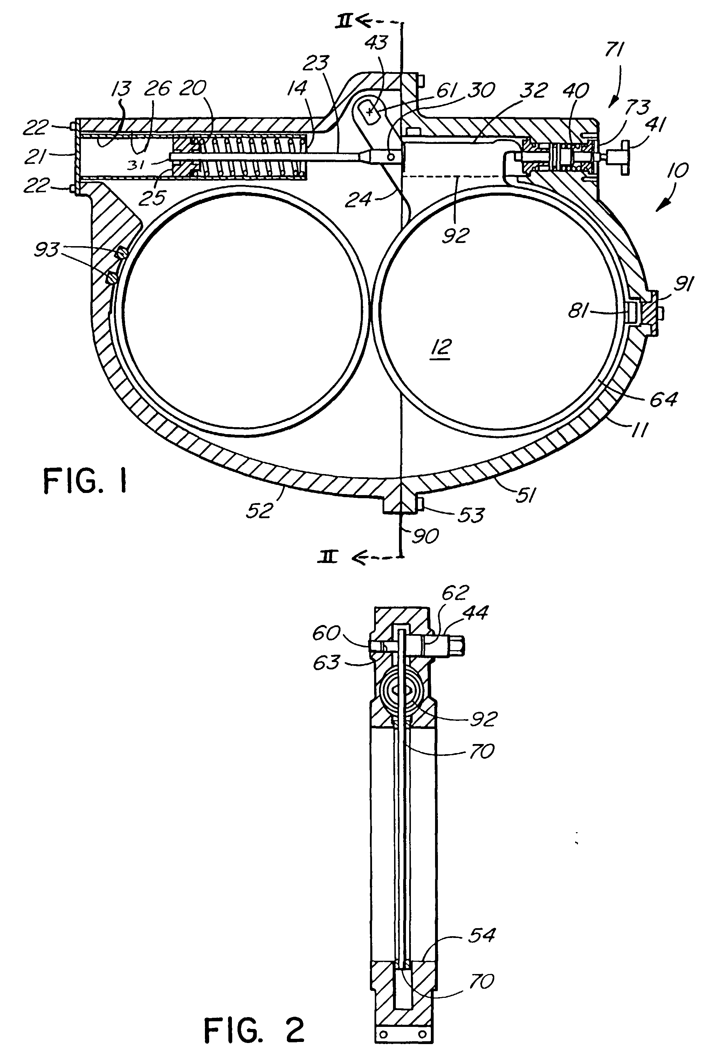

Referring now to the drawings, an engine shutdown valve according to the invention is generally shown at 10 in Figure 1. The engine shutdown valve 10 comprises a housing generally shown at 11 and a gate generally shown at 12.

A sleeve 13 is positioned within the housing 11 and a stop plate 14 closes the end of sleeve 13. A compression spring 20 is positioned within the sleeve 13 between the stop plate 14 and a spring retainer 25 which is movable within sleeve 13. The opening 26 in which sleeve 13 is mounted is closed at its leftward end by a cap 21 which is connected to the housing 11 by cap screws 22.

The housing 11 comprises two halves 51, 52 the halves being connected together with cap screws 53. Housing half 52 has an unobstructed passageway 54 (Figure 2) extending therethrough, the axis of which is parallel with the axis 43 about which gate 12 pivots. Housing half 51 includes the recess for the gate in a first position where the passageway 54 is unobstructed and where the gate 12 assumes its "latched" or retained position.

A rod 23 is connected at one end to the lever 24 of the gate 12 by a pin 30 and at the other end, which end is threaded by a nut 31 which seats on the spring retainer 25 and which is rotatable relative to the rod 23 in the seat of the spring retainer 25.

Spring retainer 25 is movable within sleeve 13 and is biased leftwardly as viewed in Figure 1 by the action of the compression spring 20 within sleeve 13 between the stop plate 14 and the spring retainer 25.

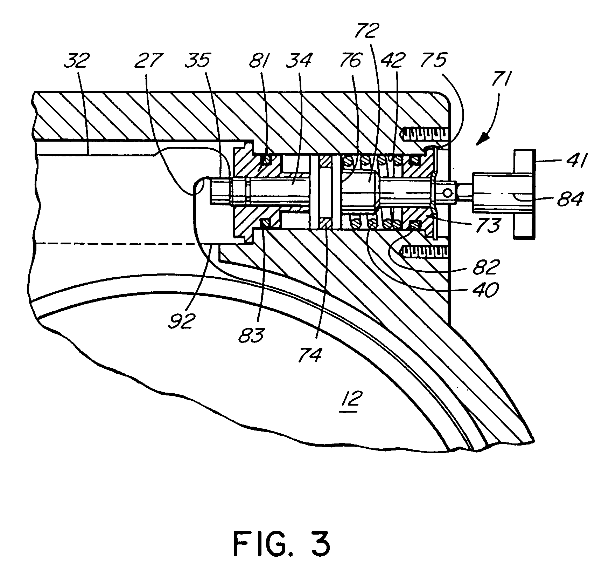

The gate lever 24 and gate 12 also include an extension 32 which moves with the gate lever 24 and gate 12. Extension 32 has a latch area 27 (Figure 3) which contacts the end 35 of a spindle 34 as will be more clearly described hereafter.

The gate lever 24 is held about pivot axis 43 by an operating shaft or drive 44 (Figure 2). Operating shaft 44 extends through an opening in the rear of housing half 52, through gate lever 24 of gate 12 and out an opening 60 of smaller diameter in the forward face of housing half 52. Operating shaft 44 has a milled flat portion 61 thereon which engages with a complementary parallel slot on gate lever 24. Operating shaft 44 thereby rotates with gate 12, gate lever 24 and extension 32. A first O-ring 62 is positioned about operating shaft 44 in housing half 52 and a second 0-ring 63 is positioned about operating shaft 44 in housing half 52 in the forward opening 60 in housing half 52. A snap ring (not illustrated) is connected to operating shaft 44 to retain it within the housing half 52 and to allow rotation of the operating shaft 44 within housing half 52.

Gate 12 has a vulcanized rubber seal or a mechanically attached TEFLON ring 64 mounted on opposite sides of the gate 12. In the closed position, the seal or ring 64 contacts the machined edges 70 of housing half 52 as illustrated in Figure 2. In the open or latched position, the gate 12 is a loose fit within the right housing 51.

Referring now to the piston assembly generally illustrated at 71 and shown in greater detail in Figure 3, a handle 41 assembly is mounted to the end of the piston 72. An end plate 73 extends about the piston 72 of the piston assembly 71 adjacent the outside of housing half 51 and is held in place by snap-ring 75. A U-cup 74 is mounted about the piston 72 and a compression spring 40 is mounted between the end plate 73 and a collar 76 of the piston 72 to exert pressure on the piston assembly 71 and thereby bias it into contact with the latch area 27 of the gate lever extension 32 or leftwardly as viewed in Figures 1 and 3. A spindle bearing 81 is mounted in the piston assembly recess 42 and an O-ring 83 extends between the spindle bearing 81 and the housing half 51. An O-ring 82 is mounted between the end plate 73 and the inside of the piston assembly recess 42. The spindle portion 34 of the piston assembly 71 has a cylindrical head 35 which is complementary to the shape of the gate extension 32 where the latching action occurs, i.e., latch area 27. Piston assembly 71 reciprocates along axis 84 so as to move in and out of contact with the latch area 27 of extension 32 as will be explained in greater detail hereafter.

A support 91 (Figure 1) is positioned in housing 51 to support the gate 12 in its open or latched position by way of a ridge (not shown), when gate 12 is in its latched position. Likewise, a guide 92 similarly supports the gate 12 in its latched position, the guide 92 having a receiving area that allows the entrance of the gate lever 24 and extension 32. The purpose of support 91 and guide 92 is to reduce or eliminate any vibration of the gate 12 during its latched retaining position.

Bumpers 93 serve as shock absorbers to reduce the impact of the gate 12 when it is released by the piston assembly 71 and moves to its closed position.

### OPERATION

In operation, the engine shutdown valve 10 is installed in the intake manifold or intake system of a diesel engine (not shown) with the unobstructed passageway being positioned so as to be coaxial with the passage of the intake system. Operating drive 44 must be rotated manually and gate 12 and extension 32 will rotate as operating drive 44 is rotated until the extension 32 contacts the head 35 of spindle 34 and moves it rightwardly until the head 35 can enter the latch area 27 of extension 32, the piston assembly 71 being biased leftwardly under the influence of compression spring 40. The gate 12 is then retained in its latched position as illustrated in Figure 1 leaving passageway 54 unobstructed. Compression spring 20 will bias the gate 12 leftwardly or towards its second position where the passageway 54 is totally obstructed.

When an overrevving condition is noticed and when the engine operation wishes to be terminated by an operator, the handle 41 is pulled by the operator rightwardly as viewed in Figures 1 and 3. The head 35 of spindle 34 will thereby move out of the latched area 27 of extension 32 with the result that the gate 12 and the gate lever 24 will immediately rotate clockwise about axis 43 under the influence of compression spring 20 and rod 23 to the second or tripped position where the passageway 54 is completely obstructed. This will terminate air flow through the engine and the engine will shut down. When the condition that gave rise to the overrevving condition is corrected, the operating shaft 44 is again manually rotated to open the gate 12 as earlier described and the engine shutdown valve is in its latched condition and ready again for operation.

It will be noted that sleeve 13 is accessible by the removal of cap 21 and that nut 31 is rotatable to increase or decrease the force in the compression spring 20 and, thereby, on rod 23. Thus, the entire valve need not be disassembled to obtain access to the spring 20 and to sleeve 13 which may be removed for servicing as well.

While the release operation of the gate 12 by the spindle 34 is described as being a manual operation, by pulling on handle 41, it is also contemplated that the release operation could be achieved by having a trip cylinder which could be signaled pneumatically or hydraulically or, alternatively, by utilizing an electric solenoid which is attached to the end of the spindle.

Many further embodiments of the invention will readily occur to those skilled in the art to which the invention relates and the specific embodiments described herein should be taken as illustrative of the invention only and not as restricting its scope as defined in accordance with the accompanying claims.

## Claims

1. An engine shutdown valve (10) comprising a housing (11), a gate (12) within said housing (11) being pivotable about a gate axis (43), a substantially unobstructed air flow passage (54) extending through said housing (11) and having a longitudinal axis parallel to said gate axis (43); a compression spring (20) operably mounted so as to bias and move said gate (12) from a first position wherein said air passage is substantially unobstructed to a second position wherein said air passage is closed; and piston assembly (71) having a spindle (34), said spindle having a first gate retaining position in which said gate (12) is retained in said first position and a second gate release position said spindle operably acting to release said gate when said spindle moves from said first retaining to said second release position, characterised in that said spindle operably acts on said gate and is out of engagement with said gate when said gate is in said second position.

2. An engine shutdown valve as in claim 1 wherein said compression spring (20) is operable on a rod (23), said rod (23) being biased by said compression spring to move said gate (12) from said first to said second position.

3. An engine shutdown valve as in claim 2 wherein said gate (12) has an extension (32), said extension (32) contacting said spindle (34) when said gate (12) is in said first position, said spindle (34) being movable out of contact with said extension (32) when said gate (12) is in said second position.

4. An engine shutdown valve as in claim 3 wherein one end of said rod (23) is pivotally connected to said gate lever (24) and the other end of said rod (23) is retained in a spring retainer (25), said spring retainer (25) being slidable within a sleeve (13) under the influence of said compression spring (20), said compression spring (20) being positioned between a stop plate (14) in said sleeve (13) and said spring retainer (25), said spring retainer (25) moving relative to said stop plate when said gate (12) moves from said first retaining to said second position.

5. An engine shutdown valve as in claim 4 wherein the end of said rod (23) within said spring retainer (25) is threaded, said threaded end of said rod being connected to a nut (31), said nut being adjustable relative to said rod to increase and decrease the force in said compression spring by moving said spring retainer (25) relative to said stop plate (14).

6. An engine shutdown valve as in claim 5 wherein said sleeve (13) is operably mounted within an opening (26) in said housing (11) and wherein said opening (26) is closed by a removable cap assembly (21,22) on the outside of said housing (11).

7. An engine shutdown valve as in claim 6 and further comprising a support (91) said gate (12), said support being mounted in said housing (11) and being operable to contact said gate when said gate is in said first position.

8. An engine shutdown valve as in claim 7 and further comprising a bumper (92) in said housing, said bumper (93) being operable to contact said gate (12) when said gate moves to said second position.

9. An engine shutdown valve (10) as in claim 1 wherein said air flow passage (54) has an axis and said housing (11) comprises first and second portions (51,52), said first housing portion (51) being connected to said second housing portion (52) along a surface area transverse to said axis of said air flow passage (54).

## Patentansprüche

1. Motorabsperrorgan (10) enthaltend ein Gehäuse (11), eine Klappe (12) innerhalb des Gehäuses (11), die um eine Klappenachse (43) drehbar ist, eine im wesentlichen unverdeckte Luftflusspassage (54), die sich durch das Gehäuse (11) erstreckt und eine Längsachse parallel zur Klappenachse (43) hat; eine Kompressionsfeder (20), die derart in Wirkverbindung ist, dass sie die Klappe (12) aus einer ersten Position, in welcher die Luftpassage im Wesentlichen unverdeckt ist, in eine zweite Position, in welcher die Luftpassage geschlossen ist, vorspannt und bewegt; und eine Kolbenanordnung (71) mit einer Spindel (34), wobei die Spindel eine erste, die Klappe zurückhaltende Position hat, in welcher die Klappe (12) in der genannten ersten Position zurückgehalten wird, und eine zweite, die Klappe freigebende Position, wobei die Spindel im Betriebszustand so wirkt, dass sie die Klappe freigibt, wenn sich die Spindel von der ersten zurückhaltenden zur zweiten freigebenden Position bewegt, **dadurch gekennzeichnet,** dass die Spindel im Betriebszustand auf die Klappe einwirkt und außer Eingriff mit der Klappe steht, wenn die Klappe in der zweiten Position ist.

2. Motorabsperrorgan nach Anspruch 1, wobei die Kompressionsfeder (20) auf eine Stange (23) wirkt, wobei die Stange (23) durch die Kompressionsfeder vorgespannt wird, um die Klappe (12) von der genannten ersten zur genannten zweiten Position zu bewegen.

3. Motorabsperrorgan nach Anspruch 2, wobei die Klappe (12) eine Erweiterung (32) hat, wobei die Erweiterung (32) die Spindel (34) kontaktiert, wenn die Klappe (12) in der genannten ersten Position ist, wobei die Spindel (34) außer Kontakt mit der Erweiterung (32) beweglich ist, Wenn die Klappe (12) in der genannten zweiten Position ist.

4. Motorabsperrorgan nach Anspruch 3, wobei ein Ende der Stange (23) drehbar mit dem Klappenhebel (24) verbunden ist, und wobei das andere Ende der Stange (23) in einer Federrückhaltung (25) zurückgehalten wird, wobei die Federrückhaltung (25) in einer Hülse (13) unter dem Einfluss der Kompressionsfeder (20) gleitend ist, wobei die Kompressionsfeder (20) zwischen einer Anschlagplatte (14) in der Hülse (13) und der Federrückhaltung (25) positioniert ist, wobei die Federrückhaltung (25) sich relativ zur Anschlagplatte bewegt, wenn sich die Klappe (12) von der genannten ersten, zurückgehaltenen zur genannten zweiten Position bewegt.

5. Motorabsperrorgan nach Anspruch 4, wobei das Ende der Stange (23) innerhalb der Federrückhaltung (25) mit Gewinde versehen ist, wobei das Gewindeende der Stange mit einer Mutter (31) verbunden ist, wobei die Mutter relativ zur Stange einstellbar ist, um die Kraft in der Kompressionsfeder durch Bewegung der Federrückhaltung (25) relativ zur Anschlagplatte (14) zu erhöhen oder zu vermindern.

6. Motorabsperrorgan nach Anspruch 5, wobei die Hülse (13) im Betriebszustand innerhalb einer Öffnung (26) in dem Gehäuse (11) angebracht ist und wobei die Öffnung (26) durch eine entfembare Deckelanordnung (21, 22) auf der Außenseite des Gehäuses (11) verschlossen ist.

7. Motorabsperrorgan nach Anspruch 6, weiterhin enthaltend einen Träger (91) für die Klappe (12), wobei der Träger in dem Gehäuse (11) angebracht ist und dahingehend wirksam ist, die Klappe zu kontaktieren, wenn die Klappe in der genannten ersten Position ist.

8. Motorabsperrorgan nach Anspruch 7, weiterhin enthaltend einen Stoßfänger (93) in dem Gehäuse, wobei der Stoßfänger (93) dahingehend wirksam ist, die Klappe (12) zu kontaktieren, wenn die Klappe sich zu der genannten zweiten Position bewegt.

9. Motorabsperrorgan (10) nach Anspruch 1, wobei die Luftflusspassage (54) eine Achse aufweist und das Gehäuse (11) ein erstes und zweites Teil (51, 52) umfasst, wobei das erste Gehäuseteil (51) mit dem zweiten Gehäuseteil (52) längs eines Oberflächenbereiches verbunden ist, der quer zur Achse der Luftflusspassage (54) verläuft.

## Revendications

1. Un clapet d'arrêt pour moteur (10) comprenant un carter (11), un registre (12) monté à l'intérieur dudit carter (11), susceptible de pivoter autour d'un axe de registre (43), un passage d'écoulement d'air (54) pratiquement non-obstrué, s'étendant à travers ledit carter (11) et ayant un axe longitudinal parallèle audit axe de registre (43) ; un ressort de compression (20) monté fonctionnellement pour influer sur et déplacer ledit registre (12), depuis une première position, dans laquelle ledit passage d'air est pratiquement non-obstrué, à une deuxième position, dans laquelle ledit passage d'air est fermé ; et un ensemble de piston (71) ayant une broche (34), ladite broche ayant une première position de retenue de registre, dans laquelle ledit registre (12) est retenu à ladite première position, et une deuxième position de libération de registre, ladite broche agissant fonctionnellement pour libérer ledit registre lorsque ladite broche se déplace de ladite première position de retenue à ladite deuxième position de libération, caractérisé en ce que ladite broche agit fonctionnellement sur ledit registre et est hors de prise avec ledit registre lorsque ledit registre se trouve à ladite deuxième position.

2. Un clapet d'arrêt pour moteur selon la revendication 1, dans lequel ledit ressort de compression (20) est susceptible de fonctionner en agissant sur une tige (23), ladite tige étant mue par ledit ressort de compression, pour déplacer ledit registre (12) de ladite première à ladite deuxième position.

3. Un clapet d'arrêt pour moteur selon la revendication 2, dans lequel ledit registre (12) présente une extension (32), ladite extension (32) étant en prise avec ladite broche (34) lorsque ledit registre (12) se trouve à ladite première position, ladite broche (34) étant déplaçable pour passer hors de contact avec ladite extension (32) lorsque ledit registre (12) se trouve à ladite deuxième position.

4. Un clapet d'arrêt pour moteur selon la revendication 3, dans lequel l'extrémité de ladite tige (23) est reliée à pivotement audit levier de registre (24) et l'autre extrémité de ladite tige (23) est retenue dans un élément de retenue de ressort (25), ledit élément de retenue de ressort (25) étant susceptible de coulisser à l'intérieur d'une douille (13), sous l'influence dudit ressort de compression (20), ledit ressort de compression étant positionné entre une plaque de butée (14), située dans ladite douille (13), et ledit élément de retenue de ressort (25), ledit élément de retenue de ressort (25) se déplaçant par rapport à ladite plaque de butée lorsque ledit registre (12) se déplace de ladite première position de retenue à ladite deuxième position.

5. Un clapet d'arrêt pour moteur selon la revendication 4, dans lequel l'extrémité de ladite tige (23), à l'intérieur dudit élément de retenue de ressort (25), est filetée, ladite extrémité filetée de ladite tige étant reliée à un écrou (31), ledit écrou étant susceptible d'être ajusté par rapport à ladite tige pour augmenter et diminuer la force agissant dans ledit ressort de compression, par déplacement dudit élément de retenue de ressort (23) par rapport à ladite plaque de butée (14).

6. Un clapet d'arrêt pour moteur selon la revendication 5, dans lequel ladite douille (13) est montée fonctionnellement à l'intérieur d'une ouverture (26) ménagée dans ledit carter (11), et dans lequel ladite ouverture (26) est fermée par un ensemble formant capuchon amovible (21, 22) placé à l'extérieur dudit carter (11).

7. Un clapet d'arrêt pour moteur selon la revendication 6 et comprenant en outre un support (41) pour ledit registre (12), ledit support est monté sur ledit carter (11) et étant susceptible de fonctionner pour entrer en contact avec ledit registre, lorsque ledit registre se trouve à ladite première position.

8. Un clapet d'arrêt pour moteur selon la revendication 7 et comprenant en outre un butoir amortisseur (93) monté dans ledit carter, ledit butoir amortisseur (43) étant susceptible de fonctionner pour entrer en contact ledit registre (11), lorsque ledit registre se déplace à ladite deuxième position.

9. Un clapet d'arrêt pour moteur (10) selon la revendication 1, dans lequel ledit passage d'écoulement d'air (54) a un axe et ledit carter (11) comprend des première et deuxième parties (51, 52), ladite première partie (51) étant reliée à ladite deuxième partie de carter (52) sur une zone de surface, transversale par rapport audit axe dudit passage d'écoulement d'air (54).
